# EUROPÄISCHE PATENTSCHRIFT

(11) **EP 1 225 093 B1**
(45) Veröffentlichungstag und Bekanntmachung des Hinweises auf die Patenterteilung: **11.08.2004**
(21) Anmeldenummer: 01130986.1
(22) Anmeldetag: 28.12.2001
(51) Int. Cl.: B60R 5/04

(54) **Laderaumabdeckung für Personenkraftfahrzeuge**
Luggage compartment cover for motor vehicles
Couvercle pour une soute à bagages pour automobiles

(30) Priorität: 22.01.2001 DE 10102792
(43) Veröffentlichungstag der Anmeldung: 24.07.2002
(73) Patentinhaber: Webasto Vehicle Systems International GmbH, 82131 Stockdorf (DE)
(72) Erfinder: Gaillard de, Francois, 85390 Mouilleron en pareds (FR)
(74) Vertreter: Konnerth, Dieter Hans

(56) Entgegenhaltungen:
- DE-A- 4 016 707
- DE-A- 19 906 648
- US-A- 4 932 704
- US-A- 5 538 306
- US-A- 6 003 920

## Beschreibung

Die Erfindung betrifft eine Vorrichtung zum Abdecken eines Laderaums eines Personenkraftfahrzeugs mit einem Abdeckrollo, das an seitlichen Führungsschienen in Fahrzeuglängsrichtung verschiebbar geführt ist, zum Öffnen und Schließen von einer Antriebseinrichtung bewegbar ist und in seiner Offenstellung in eine Ablagestellung hinter einer Sitzanordnung bewegt ist.

In der DE 199 06 648 A1 ist ein aus Lamellen bestehender und auch als Gepäckraumabdeckung dienender Rollo-Ladeboden für ein Personenkraftfahrzeug offenbart, der an seitlichen Führungsschienen, die beidseits im Laderaum angebracht sind, und an Führungsschienen, die an seitlichen Begrenzungen an einer Rücksitzlehne einer Sitzanordnung angebracht sind, verschiebbar geführt ist. Zum Öffnen des Rollo-Ladebodens wird dieser manuell vollständig an die Rückseite der Rücksitzlehne verschoben. Anschließend kann die Rücksitzlehne nach vorne geklappt werden, um den Gepäckraum zu vergrößern. Der Rollo-Ladeboden kann nun an unteren seitlichen Führungsschienen nach hinten verschoben werden und mit seiner Unterseite als Unterlage für das Beladen mit Gegenständen dienen. Die maximale Länge des Rollo-Ladebodens entspricht der Höhe der Rücksitzlehne.

Aus der 198 25 353 A1 ist eine Laderaumabdeckung für Kombi-Personenkraftwagen bekannt geworden, die ein bahnförmiges wickelbares und vom Fahrzeug entnehmbares Abdeckrollo enthält, das zum Schließen gegen Federkraft von einer Wickelwelle abwickelbar und über den Laderaum ausziehbar ist. Das Abdeckrollo enthält an seinem Hinterende eine Haltestange, deren beide Enden an jeweiligen Mitnehmern lösbar gehalten sind. Jeder Mitnehmer ist Teil einer Antriebseinheit, die den Mitnehmer an den inneren Längsseiten des Laderaums verschiebbar führt. Jede Antriebseinheit enthält einen eigenen Antriebsmotor. Um einen Gleichlauf der beiden Antriebsmotore beim Ausziehen des Abdeckrollos zu gewährleisten, ist zumindest einer der beiden Antriebsmotore mittels einer Drehzahlüberwachungseinheit und einer Kontrolleinheit hinsichtlich seiner Drehzahl regelbar.

Aus der DE 40 16 707 A1 ist ein gattungsgemäßes elektrisches Abdeckrollo bekannt geworden, das an beidseitigen Führungsschienen geführte rohrförmige Streben aufweist, die eine flexible Rollobahn tragen. Die Abdeckung besteht somit aus der flexiblen Rollobahn, die aufgrund ihrer Flexibilität eine Abstützung durch die rohrförmigen Streben benötigt. Zum Öffnen wird das Abdeckrollo nach vorne gegen eine Rücksitzlehne bis auf herausnehmbare Führungsstücke der Führungsschienen geschoben, so daß es vom Fahrzeug entnommen werden kann. Zum gleichmäßigen Verschieben der Streben ist eine Synchronisier- und Betätigungseinrichtung vorgesehen, die einen Kleinmotor aufweist, so daß das Abdeckrollo elektrisch zu öffnen und zu schließen ist. Beim Entnehmen des Abdeckrollos wird eine angetriebene Strebe von Getriebemitteln der Synchronisierund Betätigungseinrichtung getrennt.

Aus der US-A-5 538 306 ist eine Laderaumabdeckung bekannt, die von einer flexiblen Rollobahn gebildet ist. Die Rollobahn ist mit mehreren Streben fest verbunden, die an zwei seitlichen Führungsschienen verschiebbar geführt sind. Bei vollständig geöffnetem Abdeckrollo ist die Rollobahn zusammen mit den Streben in einem Aufnahmestück aufgenommen, das an den Führungsschienen lösbar angebracht ist und als Einheit mit der Rollobahn und den Streben von den Führungsschienen entnommen werden kann. Auch hier ist die Abdeckung eine flexible Rollobahn, die von den Streben gestützt werden muß.

Aufgabe der Erfindung ist es, eine eingangs genannte Abdeckvorrichtung zu schaffen, die bei einfachem Aufbau leicht bedienbar und flexibel verwendbar ist.

Diese Aufgabe wird durch eine Abdeckvorrichtung mit den Merkmalen des Anspruchs 1 sowie durch einen Abdeckvorrichtung mit den Merkmalen des Anspruchs 4 gelöst. Statt einer manuellen Bedienung kann das Abdeckrollo in einfacher Weise motorisch betätigt werden, wobei ein Betätigungsschalter am Fahrzeugheck, an der Heckklappe und/oder am Armaturenbrett oder allgemein im Bereich des Fahrers angeordnet sein kann.

Vorteilhafte Ausgestaltungen der Erfindung sind in den Unteransprüchen angegeben.

In einer bevorzugten Ausgestaltung enthält die Antriebseinrichtung einen Antriebsmotor mit zwei synchron antreibbaren Antriebskabeln, die das Abdeckrollo an seinen beiden Längsseiten antreiben. Die Antriebskabel sind an einem Abtriebsrad eines Untersetzungsgetriebes in Eingriff und werden gleichzeitig und synchron bewegt, so daß das Abdeckrollo an seinen beiden Längsseiten gleichmäßig an den Führungsschienen geführt ist und ein Verkanten oder Blockieren verhindert wird. Die Antriebskabel verlaufen in der Art von Bowdenzügen vom Antriebsmotor zu den Führungsschienen und können somit an die Einbaulage im Fahrzeug angepaßt und flexibel verlegt werden. Das aus Lamellen bestehende Abdeckrollo kann in seinen Führungen sowohl ziehend wie auch schiebend bewegt werden.

Zweckmäßigerweise kann das geöffnete Abdeckrollo aus seiner Ablagestellung entfernt werden, um den Laderaum zum Aufnehmen von sperrigen Gegenständen zu vergrößern.

Wenn das Abdeckrollo am Vorderende oder im Bereich des Vorderendes der Führungsschienen aufrollbar und mit der Antriebseinrichtung lösbar verbunden ist, kann das Abdeckrollo aus seiner Ablagestellung als aufgerolltes Paket entnommen werden. Das Abdeckrollo ist beispielsweise an einer Rücklehne einer an den Laderaum angrenzenden Sitzanordnung, z. B. einer Rücksitzbank, aufwikkelbar gelagert, beispielsweise in einem in etwa zylindrischen Aufrollraum einer an der Rücklehne lösbar befestigten Aufnahmeeinrichtung. Das Abdeckrollo kann mit der Aufnahmeeinrichtung vollständig von der Rücklehne entnommen werden. Alternativ kann das Abdeckrollo mit der klappbaren Rücklehne nach vorne umgeklappt werden, wodurch der Laderaum vergrößert wird, ohne daß jedoch das Abdeckrollo vollständig entnommen werden muß. In beiden Fällen ist jedoch besonders bevorzugt, daß das Abdeckrollo mit Antriebsteilen der Antriebseinrichtung, die an den seitlichen Führungsschienen verschiebbar gelagert sind, in einer lösbaren Verbindung gekoppelt ist. Damit kann in einfacher Weise das Abdeckrollo von dem Antrieb vollständig entkoppelt werden.

Eine flexible Verbindung zwischen dem Antriebsmotor und den Führungsschienen mittels der Antriebskabel gestattet es, daß der Antriebsmotor unter dem Laderaumboden angeordnet ist. Dabei kann der Antriebsmotor sowohl am vorderen Ende wie auch am hinteren Ende des Laderaumbodens mittig oder seitlich angeordnet sein.

Eine alternative Gestaltung sieht vor, daß das Abdeckrollo in einer an einer Rücklehne der Sitzanordnung angeordneten Aufnahmeeinrichtung ablegbar ist. Die Aufnahmeeinrichtung ist an der Rücklehne insbesondere fest angebracht und mit der Rücklehne umklappbar. Die Aufnahmeeinrichtung enthält einen länglichen Aufnahmeraum, in den das Abdeckrollo durch eine obere schlitzförmige Öffnung beispielsweise hineingezogen oder hineingeschoben wird, wobei sich die einzelnen Lamellen in dichter Packung beliebig aneinander anordnen und den Aufnahmeraum platzsparend ausfüllen.

Bevorzugt enthält die hinter der Rücklehne angeordnete Aufnahmeeinrichtung seitliche Führungen für das Abdeckrollo, die bei hochgeklappter Rücklehne an die Führungsschienen anschließen und das Abdeckrollo in dem Aufnahmeraum in geordneter Ablagestellung halten.

Wenn die seitlichen Führungen einen unteren, insbesondere U-förmigen Führungsabschnitt zum Umlenken des Abdeckrollos aufweisen, wird eine platzsparende zweilagige Ablagestellung des Abdeckrollos in dem Ablageraum vorgegeben, indem das zunächst abwärts geführte Abdeckrollo nach seiner Umlenkung wieder nach oben geführt wird. Somit kann ein vergleichsweise langes, aus Lamellen aufgebautes Abdeckrollo verwendet werden, das zum Abdecken auch für lange Laderäume geeignet ist.

Für den erfindungsgemäßen Antrieb ist zweckmäßigerweise vorgesehen, daß die Antriebseinrichtung zumindest ein drucksteifes Antriebskabel aufweist, das an der Aufnahmeeinrichtung geführt und mit dem Abdeckrollo verbunden ist.

Der Antriebsmotor der Antriebseinrichtung kann beispielsweise an der Sitzanordnung und insbesondere im Bereich der Aufnahmeeinrichtung angeordnet sein.

Nachfolgend werden Ausführungsbeispiele der Abdeckvorrichtung unter Bezugnahme auf die Zeichnungen näher erläutert. Es zeigt:
- Fig. 1: in einer perspektivischen Draufsicht ein Fahrzeugheck eines Kombis mit einem Laderaum und einem teilweise geöffneten Abdeckrollo;
- Fig. 2: in einer Seitenansicht in schematischer Darstellung das hinter einer Rücklehne aufrollbare Abdeckrollo;
- Fig. 3: in einer perspektivischen Ansicht in Teilexplosionsdarstellung das Abdeckrollo mit einer Antriebseinrichtung;
- Fig. 4: in einer Seitenansicht in schematischer Darstellung ein zweites Ausführungsbeispiel des Abdeckrollos, das in einem Aufnahmefach an einer Rücklehne aufnehmbar ist;
- Fig. 5: in einer perspektivischen Ansicht das in Fig. 4 gezeigte Abdeckrollo mit einer Antriebseinrichtung; und
- Fig. 6: in einer perspektivischen Ansicht in vergrößerter Teilexplosionsdarstellung das Abdeckrollo des zweiten Ausführungsbeispiels.

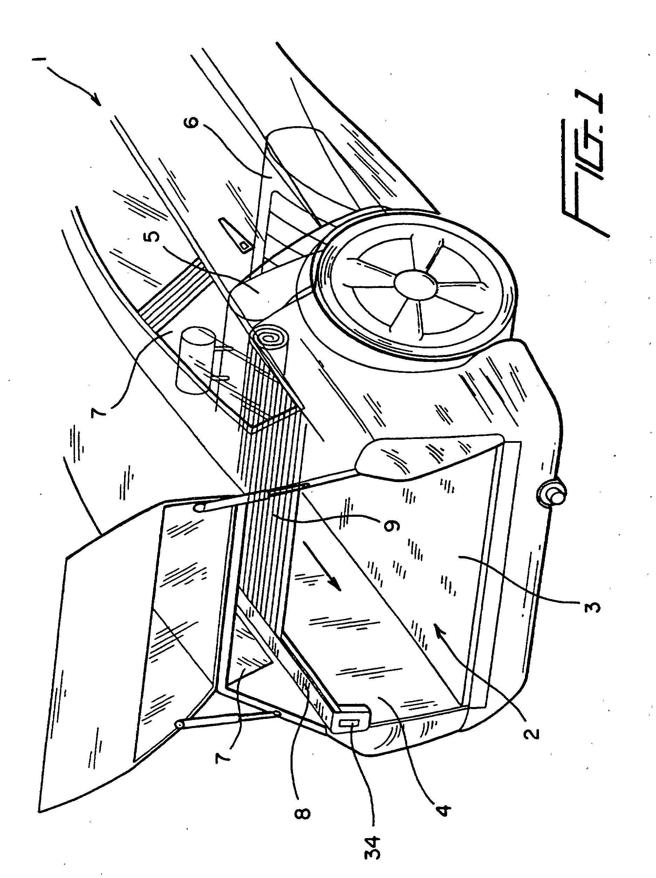

Ein Kombi-Personenkraftwagen 1 (siehe Fig. 1) enthält einen Laderaum 2, der von einem Laderaumboden 3 und zwei Seitenwänden 4 begrenzt ist. Eine insbesondere nach vorne umklappbare Rücksitzlehne 5 einer Rücksitzbank 6 bildet die vordere Begrenzung des Laderaumes 2. An jeder Seitenwand 4 ist unterhalb des hinteren Seitenfensters 7 eine Führungsschiene 8 angebracht, an der ein Abdeckrollo 9 zum Abdecken des Laderaums 2 verschiebbar geführt ist. Das Abdeckrollo 9 besteht aus biegesteifen Lamellen 10, z. B. Aluminiumlamellen, die eine derartige Festigkeit aufweisen, daß auf dem Abdeckrollo 9 Gegenstände mit einem Gewicht von z. B. bis etwa 20 kg abgelegt werden können.

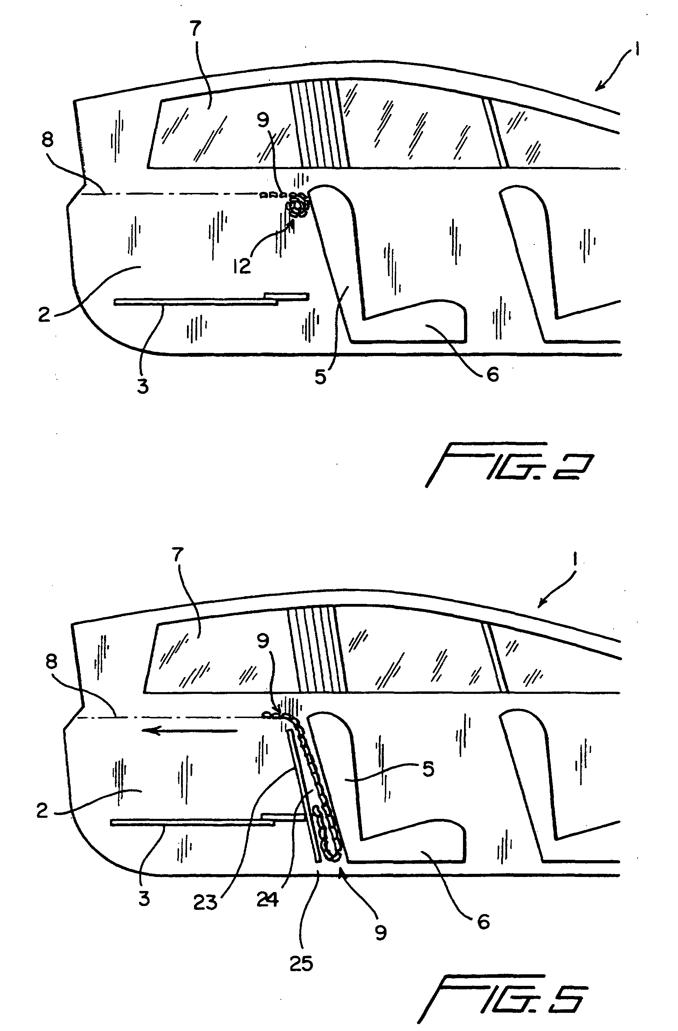

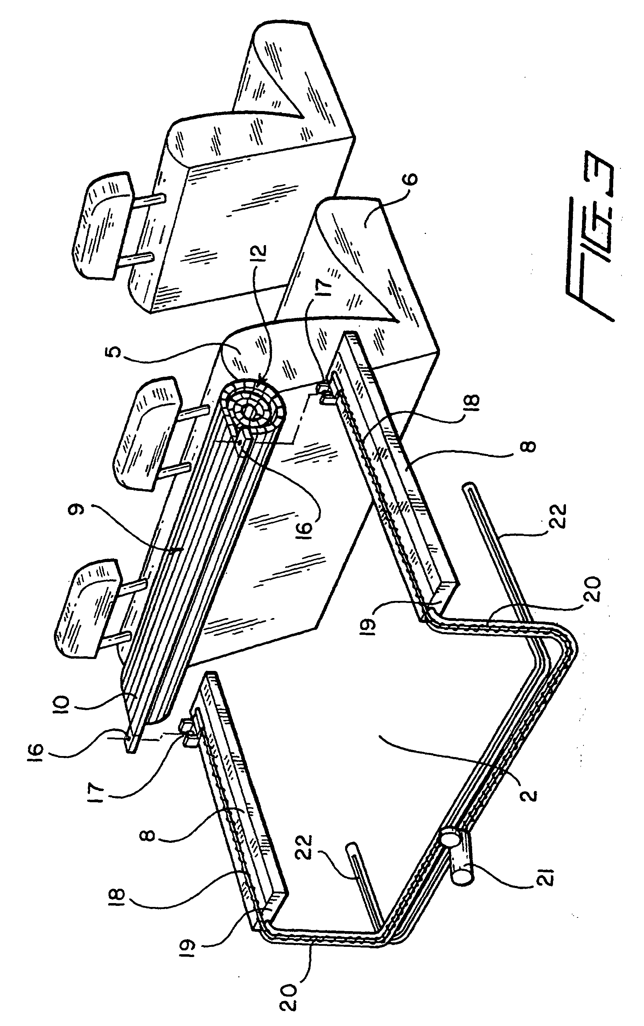

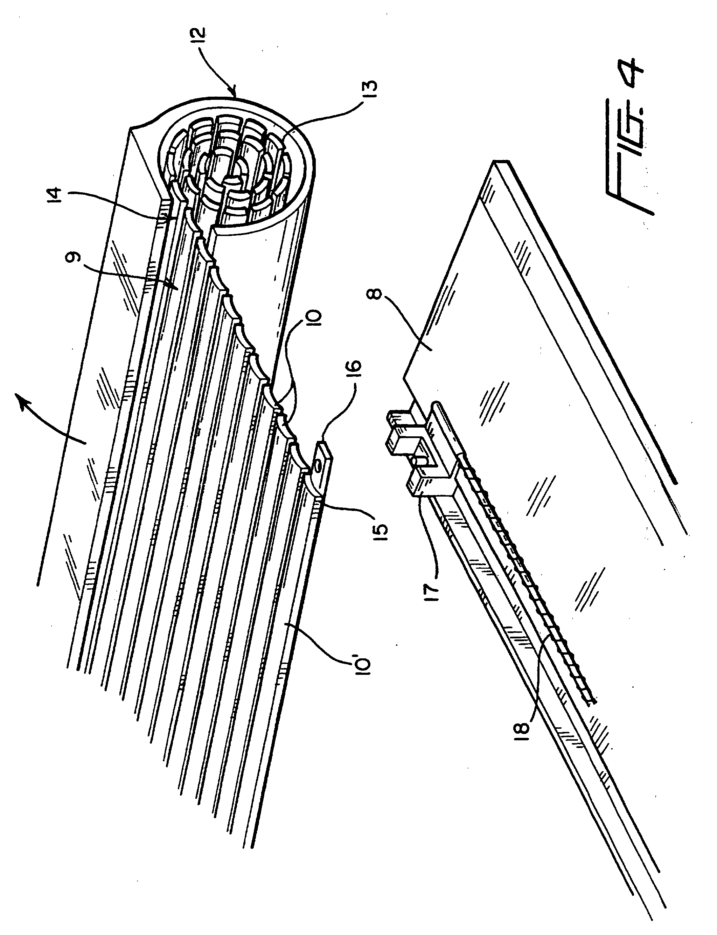

An der Rücksitzlehne 5 ist vor den Vorderenden 11 der Führungsschiene 8 eine Aufnahmeeinrichtung 12 mit einem in etwa zylindrischen Aufrollraum 13 für das Abdeckrollo 9 lösbar angebracht. Das den Laderaum 2 freilegende, geöffnete Abdeckrollo 9 ist in dem Aufrollraum 13 aufgewickelt, wobei lediglich zumindest die erste hintere Lamelle 10' durch eine Öffnung 14 aus der Aufnahmeeinrichtung 12 heraussteht und mittels an ihren beiden seitlichen Lamellenenden 15 jeweils angebrachten Kupplungsteilen 16 an einem an der Führungsschiene 8 verschiebbar gelagerten Antriebsteil 17 lösbar angekoppelt ist. Das Kupplungsteil 16 enthält beispielsweise eine Öffnung (siehe Fig. 4), in die beim Aufsetzen auf das Antriebsteil 17 ein Zapfen des Antriebsteils 17 eingreift. Jedes der beiden Antriebsteile 17 ist mittels eines Antriebskabels 18 entlang der Führungsschiene 8 verschiebbar. Die beiden Antriebskabel 18 verlaufen entlang der Führungsschienen 8 nach hinten zu deren Enden 19, anschließend in einem vertikalen Abschnitt 20 abwärts und unter dem Laderaumboden 3 zu einem Antriebsmotor 21, der beispielsweise in etwa in Fahrzeugmitte angeordnet ist. Die beiden Auslaufenden 22 der Antriebskabel 18 sind unter dem Ladeboden 2 verlegt.

Mittels der beiden drucksteifen Antriebskabel 18 und der Antriebsteile 17 kann das Abdeckrollo 9 geschlossen werden, wobei es aus dem Aufrollraum 13 herausgezogen und abgewickelt wird. Wenn das Abdeckrollo 9 in seiner Schließstellung den Laderaum 2 abdeckt, verbleiben nur eine oder wenige Lamellen 10 in dem Aufrollraum 13. Zum Öffnen des Abdeckrollos 9 wird dieses von den nach vorne bewegten Antriebsteilen 17, die an der hinteren Lamelle 10' angreifen, entlang der Führungsschienen 8 nach vorne geschoben, wobei sich die Lamellen 10 am Vorderende des Abdeckrollos 9 in dem zylindrischen Aufrollraum 13 zwangsweise aufwickeln. Eine nicht dargestellte Führungseinrichtung hinter der Öffnung 14 des Aufrollraums 13 kann das Aufwickeln des Abdeckrollos 9 unterstützen.

Wenn der Laderaum 2 zum Transport sperriger Güter vergrößert und die Rücksitzlehne 5 der Sitzanordnung 6 dafür umgelegt werden soll, kann das aufgewikkelte Abdeckrollo 9 mit seiner Aufnahmeeinrichtung 12 von der Rücksitzlehne 5 entnommen werden. Dabei wird die hintere Lamelle 10' mit den Kupplungsteilen 16 von den Antriebsteilen 17 gelöst.

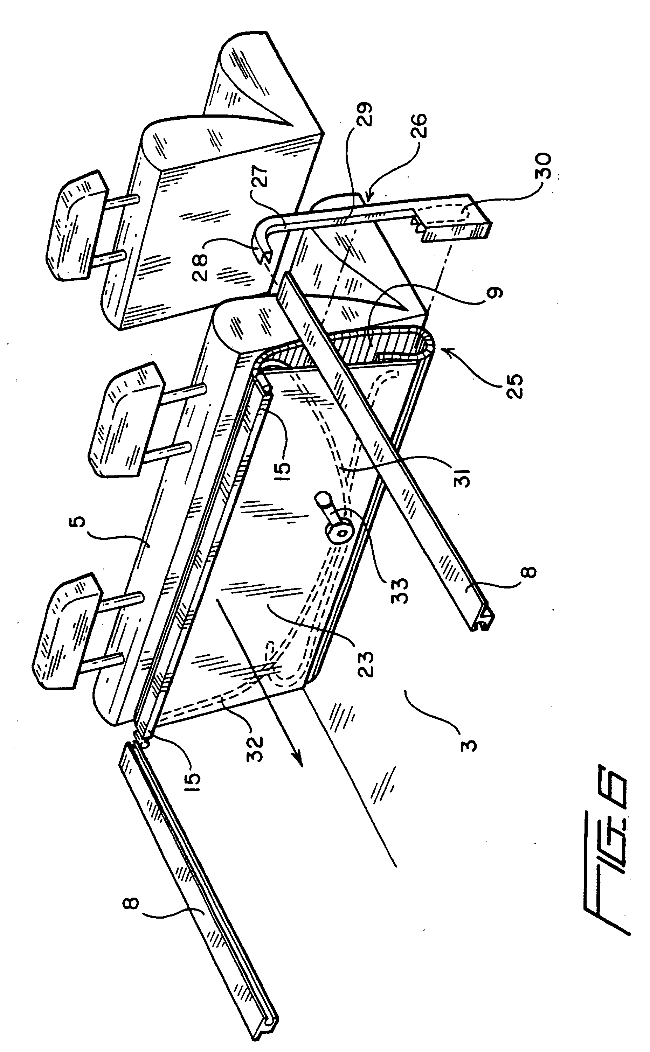

Bei einem zweiten Ausführungsbeispiel einer Abdeckvorrichtung für den Laderaum 2 (siehe Fig. 5 und 6) ist das Abdeckrollo 9 in gleicher Weise an den seitlichen Führungsschienen 8 verschiebbar gelagert. An der Rückseite der Rücksitzlehne 5 ist eine Trennwand 23 beabstandet zur Rücksitzlehne 5 angebracht, die einen Aufnahmeraum 24 einer Aufnahmeeinrichtung 25 für das geöffnete Abdeckrollo 9 zum Laderaum 2 hin begrenzt. An beiden Seiten des Aufnahmeraumes 24 ist eine Führungseinrichtung 26 für das Abdeckrollo 9 angebracht. Die Führungseinrichtung 26 enthält eine Schiene 27, die mit ihrem Oberabschnitt 28 derart an die fahrzeugfeste Führungsschiene 8 angrenzt, daß die seitlichen Lamellenenden 15 von der fahrzeugfesten Führungsschiene 8 in den Oberabschnitt 28 gleiten können. Ein Mittelabschnitt 29 der Schiene 27 ist derart angeordnet, daß die Lamellen 10 unmittelbar an der Rückseite der Rücksitzlehne 5 in dem Aufnahmeraum 24 abwärts geführt werden, bis ein Unterabschnitt 30 der Schiene 27 mit einer U-förmigen Führung die Lamellen 10 bzw. das Abdeckrollo 9 in dem Aufnahmeraum 24 wieder aufwärts führt. Durch das Ablegen des Abdeckrollos 9 in der Art einer Faltung kann auch ein längeres Abdeckrollo 9 platzsparend hinter der Rücksitzlehne 5 abgelegt werden. Falls erforderlich kann auch eine zusätzliche obere Umlenkung für das Abdeckrollo 9 vorgesehen sein, um eine dichtere Ablage zu erzielen.

Das Abdeckrollo 9 ist über zwei Antriebskabel 31 und 32 verschiebbar, die mit der rechten bzw. der linken Seite des Abdeckrollos 9 verbunden sind, beispielsweise an den beiden seitlichen Lamellenenden 15 der hinteren Lamelle 10' oder auch einer anderen Lamelle 10. Die beiden Antriebskabel 31 und 32 verlaufen im Aufnahmeraum 24 zu einem Antriebsmotor 33, der im Bereich des Aufnahmeraumes 24 angeordnet ist und beide Antriebskabel 31 und 32 zum Schließen wie auch zum Öffnen synchron antreibt.

Wenn das Abdeckrollo 9 geöffnet und vollständig nach vorne in den Aufnahmeraum 24 verschoben ist (Fig. 6), kann die Rücksitzlehne 5 nach vorne geklappt werden. Dabei wird die Trennwand 23 und der Aufnahmeraum 24 mit dem Abdeckrollo 9 einschließlich der seitlichen Führungseinrichtungen 26 und der Antriebseinrichtung nach vorne geklappt, wobei die seitlichen Führungseinrichtungen 26 von den fahrzeugfesten Führungsschienen 8 getrennt werden. Bei Verwendung von flexibel verlegten, biegbaren Antriebskabeln kann der Antriebsmotor auch z.,B. unter dem Laderaumboden 3 angeordnet sein und die Antriebskabel 31, 32 können der Klappbewegung der Rücksitzlehne 5 folgen.

Ein Schalter 34 (siehe Fig. 1) zum Betätigen des Antriebsmotors ist beispielsweise am Hinterende der seitlichen Führungsschiene 8 angebracht.

### Bezugszeichenliste

- 1: Personenkraftwagen
- 2: Laderaum
- 3: Laderaumboden
- 4: Seitenwand
- 5: Rücksitzlehne
- 6: Rücksitzbank
- 7: hinteres Seitenfenster
- 8: Führungsschiene
- 9: Abdeckrollo
- 10: Lamellen
- 11: Vorderende
- 12: Aufnahmeeinrichtung
- 13: Aufrollraum
- 14: Öffnung
- 15: Lamellenende
- 16: Kupplungsteil
- 17: Antriebsteil
- 18: Antriebskabel
- 19: Ende
- 20: vertikaler Abschnitt
- 21: Antriebsmotor
- 22: Auslaufenden
- 23: Trennwand
- 24: Aufnahmeraum
- 25: Aufnahmeeinrichtung
- 26: Führungseinrichtung
- 27: Schiene
- 28: Oberabschnitt
- 29: Mittelabschnitt
- 30: Unterabschnitt
- 31: Antriebskabel
- 32: Antriebskabel
- 33: Antriebsmotor
- 34: Schalter

## Patentansprüche

1. Vorrichtung zum Abdecken eines Laderaums (2) eines Personenkraftfahrzeugs mit einem Abdeckrollo (9), das an seitlichen Führungsschienen (8) in Fahrzeuglängsrichtung verschiebbar geführt ist, zum Öffnen und Schließen von einer Antriebseinrichtung (21; 33) bewegbar ist und in seiner Offenstellung in eine Ablagestellung hinter einer Sitzanordnung (5, 6) bewegt ist,
**dadurch gekennzeichnet,**
**daß** das Abdeckrollo (9) aus biegesteifen Lamellen (10) gebildet ist, in seiner Ablagestellung in einer an der Rücklehne (5) der Sitzanordnung (5, 6) angeordneten Aufnahmeeinrichtung (12; 25) aufgenommen ist und mit Antriebsteilen (17) der Antriebseinrichtung (21), die an den seitlichen Führungsschienen (8) verschiebbar gelagert sind, in einer lösbaren Verbindung gekoppelt ist, wobei die Antriebseinrichtung (21) außerhalb des Laderaums (2) angeordnet ist.

2. Vorrichtung nach Anspruch 1,
**dadurch gekennzeichnet, daß** das Abdeckrollo (9) am Vorderende (11) der Führungsschienen (8) aufrollbar und mit der Antriebseinrichtung (17) lösbar verbunden ist.

3. Vorrichtung nach Anspruch 1 oder 2,
**dadurch gekennzeichnet, daß** der Antriebsmotor (21) unter dem Laderaumboden (3) angeordnet ist.

4. Vorrichtung zum Abdecken eines Laderaums (2) eines Personenkraftfahrzeugs mit einem Abdeckrollo (9), das an seitlichen Führungsschienen (8) in Fahrzeuglängsrichtung verschiebbar geführt ist, zum Öffnen und Schließen von einer Antriebseinrichtung (21; 33) bewegbar ist und in seiner fenstellung in eine Ablagestellung hinter einer Sitzanordnung (5, 6) bewegt ist,
**dadurch gekennzeichnet,**
**daß** das Abdeckrollo (9) aus biegesteifen Lamellen (10) gebildet ist und in seiner Ablagestellung in einer an der Rücklehne (5) der Sitzanordnung (5, 6) angeordneten Aufnahmeeinrichtung (25) aufgenommen ist und
**daß** die Antriebseinrichtung (33) drucksteife Antriebskabel (31, 32) aufweist, die an der Aufnahmeeinrichtung (25) geführt und mit dem Abdeckrollo (9) verbunden sind.

5. Vorrichtung nach einem der Ansprüche 1 bis 4,
**dadurch gekennzeichnet, daß** die Antriebseinrichtung einen Antriebsmotor (21; 33) mit zwei synchron antreibbaren Antriebskabeln (18; 31, 32) aufweist, die das Abdeckrollo (9) an seinen beiden Längsseiten (15) antreiben.

6. Vorrichtung nach einem der Ansprüche 1 bis 5,
**dadurch gekennzeichnet, daß** das geöffnete Abdeckrollo (9) aus seiner Ablagestellung entfernbar ist.

7. Vorrichtung nach einem der Ansprüche 4 bis 6,
**dadurch gekennzeichnet, daß** das Abdeckrollo (9) mit Antriebsteilen (17) der Antriebseinrichtung, die an den seitlichen Führungsschienen (8) verschiebbar gelagert sind, in einer lösbaren Verbindung gekoppelt ist.

8. Vorrichtung nach einem der Ansprüche 4 bis 7,
**dadurch gekennzeichnet, daß** die hinter der Rücklehne (5) angeordnete Aufnahmeeinrichtung (25) seitliche Führungseinrichtungen (26) für das Abdeckrollo (9) aufweist, die das Abdeckrollo (9) in einem Aufnahmeraum (24) geordnet halten und bei hochgeklappter Rücklehne (5) an die Führungsschienen (8) anschließen.

9. Vorrichtung nach Anspruch 8,
**dadurch gekennzeichnet, daß** die seitlichen Führungseinrichtungen (8) einen unteren, insbesondere U-förmigen Führungsabschnitt (30) zum Umlenken des Abdeckrollos (9) aufweisen.

10. Vorrichtung nach Anspruch 8 oder 9,
**dadurch gekennzeichnet, daß** ein Antriebsmotor (33) der Antriebseinrichtung an der Sitzanordnung (5, 6) angeordnet ist.

## Claims

1. Device for covering a cargo space (2) of a passenger car with a roller blind cover (9) which is displaceably guided in the vehicle longitudinal direction on lateral guide rails (8), can be moved by a drive device (21; 33) in order to open and close it and, in its open position, is moved into a storage position behind a seat arrangement (5, 6),
**characterized in that**
the roller blind cover (9) is formed of flexurally rigid slats (10), in its storage position is accommodated in a holding device (12; 25) arranged on the backrest (5) of the seat arrangement (5, 6) and is coupled in a detachable connection to drive parts (17) of the drive device (21), which are displaceably mounted on the lateral guide rails (8), the drive device (21) being arranged outside the cargo space (2).

2. Device according to Claim 1, **characterized in that** the roller blind cover (9) can be rolled up at the front end (11) of the guide rails (8) and is detachably connected to the drive device (17).

3. Device according to Claim 1 or 2, **characterized in that** the drive motor (21) is arranged under the cargo space floor (3).

4. Device for covering a cargo space (2) of a passenger car with a roller blind cover (9) which is displaceably guided in the vehicle longitudinal direction on lateral guide rails (8), can be moved by a drive device (21; 33) in order to open and close it and, in its open position, is moved into a storage position behind a seat arrangement (5, 6),
**characterized in that**
the roller blind cover (9) is formed of flexurally rigid slats (10) and, in its storage position, is accommodated in a holding device (25) arranged on the backrest (5) of the seat arrangement (5, 6), and
**in that** the drive device (33) has drive cables (31, 32) which are rigid in compression, are guided on the holding device (25) and are connected to the roller blind cover (9).

5. Device according to one of Claims 1 to 4, **characterized in that** the drive device has a drive motor (21; 33) with two drive cables (18; 31, 32) which can be driven synchronously and which drive the roller blind cover (9) at its two longitudinal sides (15).

6. Device according tc one of Claims 1 to 5, **characterized in that** the opened roller blind cover (9) can be removed from its storage position.

7. Device according to one of Claims 4 to 6, **characterized in that** the roller blind cover (9) is coupled in a detachable connection to drive parts (17) of the drive device which are displaceably mounted on the lateral guide rails (8).

8. Device according to one of Claims 4 to 7, **characterized in that** the holding device (25) arranged behind the backrest (5) has lateral guide devices (26) for the roller blind cover (9), which hold the roller blind cover (9) tidily in a holding space (24) and, when the backrest (5) is folded up, adjoin the guide rails (8).

9. Device according to Claim 8, **characterized in that** the lateral guide devices (8) have a lower, in particular U-shaped, guide section (30) to deflect the roller blind cover (9).

10. Device according to Claim 8 or 9, **characterized in that** a drive motor (33) belonging to the drive device is arranged on the seat arrangement (5, 6).

## Revendications

1. Dispositif pour recouvrir la soute à bagages (2) d'un véhicule automobile de tourisme, comportant un store d'occultation (9) à enrouleur qui est guidé à coulissement dans la direction longitudinale du véhicule, sur des glissières latérales de guidage (8), peut être animé de mouvements par un système d'entraînement (21 ; 33), en vue de l'ouverture et de la fermeture, et est déplacé, dans sa position d'ouverture, vers une position de remisage derrière une banquette (5, 6),
**caractérisé par le fait**
**que** le store d'occultation (9) à enrouleur est constitué de lamelles (10) rigides à la flexion ; est reçu, dans sa position de remisage, par un système de réception (12 ; 25) disposé sur le dossier (5) de la banquette (5, 6) ; et est accouplé, par une solidarisation libérable, avec des pièces menantes (17) du système d'entraînement (21) qui sont montées à coulissement sur les glissières latérales de guidage (8), ledit système d'entraînement (21) étant placé à l'extérieur de la soute à bagages (2).

2. Dispositif selon la revendication 1,
**caractérisé par le fait que** le store d'occultation (9) à enrouleur peut être enroulé à l'extrémité antérieure (11) des glissières de guidage (8), et est relié amoviblement au système d'entraînement (17).

3. Dispositif selon la revendication 1 ou 2,
**caractérisé par le fait que** le moteur d'entraînement (21) est disposé au-dessous du plancher (3) de la soute à bagages.

4. Dispositif pour recouvrir la soute à bagages (2) d'un véhicule automobile de tourisme, comportant un store d'occultation (9) à enrouleur qui est guidé à coulissement dans la direction longitudinale du véhicule, sur des glissières latérales de guidage (8), peut être animé de mouvements par un système d'entraînement (21 ; 33), en vue de l'ouverture et de la fermeture, et est déplacé, dans sa position d'ouverture, vers une position de remisage derrière une banquette (5, 6),
**caractérisé par le fait**
**que** le store d'occultation (9) à enrouleur est constitué de lamelles (10) rigides à la flexion et est reçu, dans sa position de remisage, par un système de réception (25) disposé sur le dossier (5) de la banquette (5, 6) ; et par le fait que le système d'entraînement (33) présente des câbles d'entraînement (31, 32) rigides à la pression, guidés sur ledit système de réception (25) et reliés audit store d'occultation (9) à enrouleur.

5. Dispositif selon l'une des revendications 1 à 4,
**caractérisé par le fait que** le système d'entraînement comporte un moteur d'entraînement (21 ; 33) associé à deux câbles d'entraînement (18 ; 31, 32) qui peuvent être menés en synchronisme, et entraînent le store d'occultation (9) à enrouleur sur ses deux côtés longitudinaux (15).

6. Dispositif selon l'une des revendications 1 à 5,
**caractérisé par le fait que** le store d'occultation (9) à enrouleur peut être éloigné de sa position de remisage à l'état ouvert.

7. Dispositif selon l'une des revendications 4 à 6,
**caractérisé par le fait que** le store d'occultation (9) à enrouleur est accouplé, par une solidarisation libérable, avec des pièces menantes (17) du système d'entraînement qui sont montées à coulissement sur les glissières latérales de guidage (8).

8. Dispositif selon l'une des revendications 4 à 7,
**caractérisé par le fait que** le système de réception (25), placé derrière le dossier (5), comporte des systèmes latéraux (26) qui assurent le guidage du store d'occultation (9) à enrouleur, maintiennent ledit store d'occultation (9) à enrouleur à l'état rangé dans un réceptacle (24), et se rattachent aux glissières de guidage (8) lorsque le dossier (5) est relevé par pivotement.

9. Dispositif selon la revendication 8,
**caractérisé par le fait que** les systèmes latéraux de guidage (8) présentent un tronçon inférieur de guidage (30) notamment configuré en U, en vue de dévier le store d'occultation (9) à enrouleur.

10. Dispositif selon la revendication 8 ou 9,
**caractérisé par le fait qu'**un moteur d'entraînement (33) du système d'entraînement est disposé sur la banquette (5, 6).
